# EUROPÄISCHE PATENTSCHRIFT

(11) **EP 2 918 005 B1**
(45) Veröffentlichungstag und Bekanntmachung des Hinweises auf die Patenterteilung: **15.06.2016**
(21) Anmeldenummer: 13815402.6
(22) Anmeldetag: 06.12.2013
(51) Int. Cl.: B22D 17/20, B22D 19/00, H02K 17/20, H02K 1/32, H02K 15/00, H02K 17/18

(54) **ZUVERLÄSSIGER KÄFIGLÄUFER**
RELIABLE CAGE ROTOR
CAGE D'ÉCUREUIL SÉCURISÉE

(30) Priorität: 14.12.2012 EP 12197266
(43) Veröffentlichungstag der Anmeldung: 16.09.2015
(73) Patentinhaber: Siemens Aktiengesellschaft, 80333 München (DE)
(72) Erfinder: BRANDL, Konrad, 93107 Thalmassing (DE); FICHTNER, Siegfried, 90584 Allersberg (DE); PIOTROWSKI, Patryk, 90459 Nürnberg (DE); SCHARRER, Martin, 91220 Schnaittach (DE)
(86) Internationale Anmeldenummer: PCT/EP2013/075758
(87) Internationale Veröffentlichungsnummer: WO 2014/090694

(56) Entgegenhaltungen:
- DE-A1- 4 308 683
- FR-A1- 2 264 614
- JP-A- H 104 658

## Beschreibung

Die Erfindung betrifft einen Käfigläufer gemäß dem Oberbegriff des Patentanspruchs 1, eine elektrische Maschine, die den Käfigläufer umfasst, sowie eine Serie von elektrischen Maschinen, die mindestens eine erste elektrische Maschine umfasst, die den Käfigläufer aufweist. Ferner betrifft die Erfindung ein Verfahren zur Herstellung des Käfigläufers.

Ein derartiger Käfigläufer ist aus der DE 199 01 195 A1 bekannt. Es wird dort das Problem gelöst, dass bei einer einstückigen Herstellung von Läuferstäben und Kurzschlussringen in einer Aluminiumdruckgusstechnik am Übergang zwischen den Kurzschlussringen und den Läuferstäben eine Neigung zu einer Rissbildung auftritt. Zur Lösung des Problems werden an einem linken und einem rechten Ende zwischen einem Läuferblechpaket und den Kurzschlussringen Distanzelemente in eine Druckguss-Käfigwicklung mit eingegossen. In der DE 199 01 195 A1 wird auch das Problem einer nicht vorhandenen Belüftung eines Rotors gelöst, indem Bleche des Läuferblechpakets Kühlbohrungen zur Bildung von axial durch einen Läuferkern verlaufenden Kühlkanälen aufweisen.

Bei Käfigläufern sind neben den im letzten Abschnitt beschriebenen einstückig aus einem elektrisch leitfähigen Material ausgebildeten Käfigwicklungen beispielsweise auch Ausführungen bekannt, die Kurzschlussstäbe aufweisen, die in Nuten eines Läuferblechpakets eingelegt werden und anschließend durch Kurzschlussringe, die mittels eines Druckgussverfahrens hergestellt werden, verbunden werden. So sind beispielsweise aus der EP 2 282 396 A1 Käfigläufer bekannt, bei denen in den Nuten des Läuferblechpakets Kurzschlussstäbe eingelegt werden, und nach dem Einlegen dieser Kurzschlussstäbe der verbleibende Restquerschnitt der Nuten durch ein Druckgussverfahren mit einem ersten Material aufgefüllt werden und die Kurzschlussringe mittels des Druckgussverfahrens hergestellt werden. Aus der EP 2 282 396 A1 sind auch Käfigläufer bekannt, deren Kurzschlussstäbe Nuten vollständig ausfüllen. Die Kurzschlussstäbe sind aus einem zweiten Material mit einem höheren spezifischen elektrischen Leitwert als das erste Material, welches für eine Herstellung von Kurzschlussringen verwendet wird. Wenn als zweites Material Kupfer verwendet wird, erhält man eine Asynchronmaschine, die aufgrund der in den Nuten angelegten Kupferstäbe einen Wirkungsgrad aufweist, der im Bereich der einer Asynchronmaschine mit einem Kupferdruckgussläufer liegt, wobei die Herstellungskosten jedoch deutlich geringer sind.

Aus der JP H10 4658 A ist ein Käfigläufer für eine elektrische Maschine bekannt, bei dem die Läuferstäbe einerseits aus soliden Kupferstäben und andererseits aus gegossenen Aluminiumstäben bestehen.

Da bei allen Käfigläufern eine hohe Qualität bei niedrigen Herstellungskosten angestrebt wird, ist es wichtig, einen weiteren technischen Beitrag zu leisten, der alleine, alternativ oder in Kombination mit bekannten Maßnahmen eine elektrische Maschine mit hoher Qualität ermöglicht.

Der Erfindung liegt daher die Aufgabe zugrunde, einen Käfigläufer für eine elektrische Maschine mit einer hohen Qualität zur Verfügung zu stellen.

Die Aufgabe wird durch einen Käfigläufer für eine elektrische Maschine mit den Merkmalen des Anspruchs 1 gelöst.

Ein erfindungsgemäßer Käfigläufer für eine elektrische Maschine ist ein Käfigläufer, der
- ein Läuferblechpaket, das sich in einer axialen Richtung von einem ersten axialen Ende zu einem zweiten axialen Ende entlang einer Drehachse erstreckt und das in der axialen Richtung geschichtete Bleche aufweist,
- einen Kurzschlussring, der die Drehachse umgibt und der an dem ersten axialen Ende angeordnet ist, und
- einen weiteren Kurzschlussring, der die Drehachse umgibt und der an dem zweiten axialen Ende angeordnet ist, umfasst,
- wobei der Kurzschlussring und der weitere Kurzschlussring ein erstes Material umfassen,
- wobei die Bleche jeweils erste Ausstanzungen aufweisen, die Ränder von Nuten des Läuferblechpakets bilden, die vom ersten axialen Ende zum zweiten axialen Ende verlaufen,
- wobei die Bleche jeweils eine zweite Ausstanzung aufweisen, die Ränder von einem Durchgang bilden, der vom ersten axialen Ende zum zweiten axialen Ende verläuft,
- wobei die ersten Ausstanzungen in einem äußeren Bereich der Bleche liegen und die zweite Ausstanzung in einem inneren Bereich der Bleche liegt,
- wobei der Durchgang mit einem Füllmaterial aus dem ersten Material ausgefüllt ist, das einstückig mit dem Kurzschlussring und dem weiteren Kurzschlussring verbunden ist.

Die Aufgabe wird auch durch eine elektrische Maschine mit den Merkmalen nach Anspruch 6 gelöst.

Eine erfindungsgemäße elektrische Maschine umfasst einen erfindungsgemäßen Käfigläufer.

Die Aufgabe wird auch durch ein Verfahren zur Herstellung eines Käfigläufers nach Anspruch 7 gelöst.

Bei einem erfindungsgemäßen Verfahren zur Herstellung eines erfindungsgemäßen Käfigläufers wird das Füllmaterial zumindest teilweise über den Durchgang zum zweiten axialen Ende gebracht.

Ferner wird die Aufgabe durch eine Serie von elektrischen Maschinen nach Anspruch 8 gelöst.

Eine erfindungsgemäße Serie von elektrischen Maschinen umfasst mindestens eine erste elektrische Maschine, die einen ersten erfindungsgemäßen Käfigläufer aufweist, und mindestens eine zweite elektrische Maschine,
- wobei die zweite elektrische Maschine eine Käfigläufer-Variante mit einer Läuferblechpaket-Variante aufweist, die Bleche mit jeweils ersten Ausstanzungen und jeweils einer zweiten Ausstanzung wie die Bleche des ersten Käfigläufers aufweisen,wobei die jeweils ersten Ausstanzungen der Bleche Ränder von Nuten der Läuferblechpaket-Variante bilden, die von einem ersten axialen Ende der Läuferblechpaket-Variante zu einem zweiten axialen Ende der Läuferblechpaket-Variante verlaufen,wobei die jeweils zweite Ausstanzung der Bleche Ränder von einem offenen Durchgang der Läuferblechpaket-Variante bilden, der vom ersten axialen Ende der Läuferblechpaket-Variante zum zweiten axialen Ende der Läuferblechpaket-Variante verläuft.

Der erfindungsgemäße Käfigläufer löst die Aufgabe vorteilhaft, indem die zweite Ausstanzung der Bleche, die im inneren Bereich der Bleche liegt und die Ränder von dem Durchgang bildet, bei einem Gießen des weiteren Kurzschlussrings genutzt wird, um zumindest teilweise das Füllmaterial über den Durchgang vom ersten axialen Ende zum zweiten axialen Ende zu bringen, so dass das erste Material in einem ausreichend flüssigen Zustand in einer ausreichenden Menge am zweiten axialen Ende für den weiteren Kurzschlussring zur Verfügung steht. Das erste Material kann so den weiteren Kurzschlussring mit einer hohen Qualität bilden. Vorteilhaft ist die Benutzung der zweiten Ausstanzung im inneren Bereich der Bleche, da der Durchgang im inneren Bereich der Bleche, insbesondere das Füllmaterial, eine geringe Auswirkung auf die Eigenschaften, insbesondere die elektrischen, magnetischen oder kinematischen Eigenschaften, eines erfindungsgemäßen Käfigläufers, insbesondere bei einem Betrieb einer erfindungsgemäßen elektrischen Maschine, hat. Dies trägt vorteilhaft zusätzlich dazu bei, einen Käfigläufer für eine elektrische Maschine mit einer hohen Qualität zur Verfügung stellen zu können. Unter anderem führt die einstückige Verbindung zwischen dem Kurzschlussring und dem weiteren Kurzschlussring durch das Füllmaterial zu einem vorteilhaften Abführen einer Abwärme aus dem Läuferblechpaket in den Kurzschlussring und den weiteren Kurzschlussring. Da der Durchgang im inneren Bereich der Bleche liegt, kann eine weitere Abfuhr der Abwärme vorteilhaft über eine Welle erfolgen.

Bei einer Herstellung eines erfindungsgemäßen Käfigläufers ermöglicht das in einem ausreichend flüssigen Zustand und in einer ausreichenden Menge am zweiten axialen Ende vorhandene erste Material, dass bei einem Erstarren des ersten Material der weitere Kurzschlussring mit Materialeigenschaften hoher Qualität ausgebildet wird, insbesondere hinsichtlich der räumlichen Verteilung des ersten Materials. Es kann vorteilhaft eine homogenere räumliche Verteilung des ersten Materials erreicht werden. Es kann auch vorteilhaft eine räumlich dichtere Verteilung des ersten Materials, insbesondere mit geringerer Porosität, im weiteren Kurzschlussring erreicht werden.

Die axialen Richtungen sind Richtungen parallel zur Drehachse. Eine radiale Richtung ist eine Richtung senkrecht zur Drehachse. Entfernt man sich im Läuferblechpaket von der Drehachse in einer radialen Richtung, gelangt man von dem inneren Bereich der Bleche in den äußeren Bereich der Bleche.

Das erste Material ist vorteilhaft ein Material, das eine bessere Wärmeleitfähigkeit aufweist, als das Material der Bleche. So kann z.B. vorteilhaft das erste Material Kupfer umfassen und die Bleche können ferromagnetische Bleche, z.B. Elektrobleche sein. In einem vorteilhaften weiteren Beispiel könnte das erste Material Aluminium umfassen, das bei guter Wärmeleitfähigkeit vorteilhaft die kinematischen Eigenschaften des Käfigläufers verbessert, da Aluminium eine geringere Massendichte als Kupfer aufweist. Aluminium weist auch vorteilhaft eine geringere Massendichte als Eisen-Silizium-Legierungen auf, die in Elektroblechen Verwendung finden.

Ein erfindungsgemäßer Käfigläufer kann in den Blechen jeweils weitere Ausstanzungen aufweisen, die in dem inneren Bereich der Bleche liegen und Ränder von weiteren Durchgängen bilden, die mit dem Füllmaterial aus dem ersten Material ausgefüllt sind, das einstückig mit dem Kurzschlussring und dem weiteren Kurzschlussring verbunden ist. Dies ermöglicht eine vorteilhafte Nutzung des Durchgangs und der weiteren Durchgänge. Indem mit dem Durchgang und den weiteren Durchgängen eine größere Anzahl an Durchgängen vorgesehen sind, kann vorteilhaft durch die größere Anzahl der Durchgänge ohne auf eine hohe mechanische Stabilität des Käfigläufers verzichten zu müssen eine größere Menge des ersten Materials pro Zeiteinheit vom ersten axialen Ende zum zweiten axialen Ende gebracht werden. So kann das erste Material in einem ausreichend flüssigen Zustand in einer ausreichenden Menge am zweiten axialen Ende für den weiteren Kurzschlussring zur Verfügung stehen.

Ein erfindungsgemäßer Käfigläufer ist für eine elektrische Maschine, in der er bei einem Betrieb durch ein magnetisches Zusammenwirken zwischen einem Stator der elektrischen Maschine und dem Käfigläufer in Drehung versetzt wird, so dass mechanische in elektrische Energie umgewandelt werden kann. Die elektrische Energie kann an einer Wicklung des Stators durch Anschließen eines elektrischen Verbrauchers entnommen werden. Bei einem Betrieb der elektrischen Maschine kann auch über eine Wicklung des Stators elektrische Energie zugeführt werden, und durch das magnetische Zusammenwirken zwischen Stator und Käfigläufer in mechanische Energie umgewandelt werden. Dabei wird der Käfigläufer in Drehung versetzt und es kann an der Welle mechanische Energie an einen mechanischen Verbraucher in Form einer Drehbewegung abgegeben werden.

Für die Drehung des Käfigläufers um die Drehachse kann der Käfigläufer die Welle aufweisen, die sich entlang der Drehachse erstreckt, und an der das Läuferblechpaket befestigt werden kann.

Für das magnetische Zusammenwirken des Käfigläufers mit dem Stator in einer elektrischen Maschine, z.B. in einer Asynchronmaschine, weist der Käfigläufer eine Wicklung auf. Die Wicklung erstreckt sich in den Nuten des Läuferblechpakets und wird durch den Kurzschlussring und den weiteren Kurzschlussring kurzgeschlossen. Eine Kurzschlusswicklung umfasst die Wicklung des Käfigläufers, den Kurzschlussring und den weiteren Kurzschlussring. Je niedriger der elektrische Widerstand der Kurzschlusswicklung, insbesondere ein im Betrieb der elektrischen Maschine wirksame Widerstand der Kurzschlusswicklung, ist, umso höher ist der Wirkungsgrad der bei einer elektrischen Maschine mit dem Käfigläufer erreicht wird. Mit dem bei einer Herstellung eines erfindungsgemäßen Käfigläufers in einem ausreichend flüssigen Zustand und in einer ausreichenden Menge am zweiten axialen Ende vorhandene erste Material wird vorteilhaft ein niedriger elektrischer Widerstand der Kurzschlusswicklung erreicht. Unter anderem dadurch, dass sich beim Erstarren des ersten Materials eine vorteilhafte elektrische Verbindung, insbesondere innerhalb des ersten Materials, ausbildet.

Ein erfindungsgemäßer Käfigläufer kann so ausgeführt sein, dass die Ränder einer der Nuten des Läuferblechpakets, die durch die ersten Ausstanzungen gebildet sind, die Wicklung vorteilhaft umschließen. Unter anderem wird so die Wicklung vorteilhaft in den Nuten gehalten.

Eine erfindungsgemäße elektrische Maschine kann zu ihrem eigenen Schutz ein Gehäuse aufweisen, in dem der Stator angeordnet ist und in dem der Käfigläufer zwischen dem Stator drehbar gelagert ist. Die drehbare Lagerung des Käfigläufers kann über die Welle durch Lager, z.B. Wälzlager, im Gehäuse erfolgen.

Eine erfindungsgemäße elektrische Maschine weist neben den bereits angeführten Vorteilen auch den weiteren Vorteil auf, dass der Stator nur in wenigen Fällen bei einer unterschiedlichen Nutzung der zweiten Ausstanzung der Bleche angepasst werden muss. Eine unterschiedliche Nutzung der zweiten Ausstanzung in den Blechen besteht darin, dass bei einer Nutzung der Durchgang mit einem Füllmaterial ausgefüllt ist und bei einer anderen Nutzung den Durchgang nicht ausgefüllt ist. Ein nicht ausgefüllter Durchgang ist bei einem erfindungsgemäßen Käfigläufer als Kühlkanal für eine Kühlung durch ein Fluid, z.B. Luft, nutzbar.

Wenn der Käfigläufer neben dem Durchgang noch weitere Durchgänge aufweist, können die Durchgänge vorteilhaft unterschiedlich genutzt werden. Die unterschiedliche Nutzung der Durchgänge kann so erfolgen, dass ein Käfigläufer für eine elektrische Maschine mit einer hohen Qualität zur Verfügung gestellt werden kann. Es wurde festgestellt, dass bei einem Ausfüllen von einem oder weiteren Durchgängen die verbleibenden, nicht ausgefüllten weiteren Durchgänge genügen, um eine Vergleichmäßigung einer Entwärmung von Wicklungsköpfen der Wicklung des Stators weiterhin zu ermöglichen.

Eine erfindungsgemäße Serie von elektrischen Maschinen weist neben den bereits angeführten Vorteilen auch den weiteren Vorteil auf, dass trotz unterschiedlicher Merkmale der ersten elektrischen Maschine und mindestens der zweiten elektrischen Maschine der Serie der Kurzschlussring und der weitere Kurzschlussring mit einer hohen Qualität gefertigt werden können. Der Durchgang oder die weiteren Durchgänge können im erforderlichen Maße für eine Herstellung einer bestimmten elektrischen Maschine der Serie vorteilhaft herangezogen werden, um das Füllmaterial zumindest teilweise über die Durchgänge vom ersten axialen Ende zum zweiten axialen Ende zu bringen. Vorteilhaft können für elektrische Maschinen der erfindungsgemäßen Serie Bleche mit den gleichen ersten Ausstanzungen und der gleichen zweiten Ausstanzung und bei weiteren Durchgängen mit den gleichen weiteren Ausstanzungen verwendet werden. Dies führt dazu, dass die Bleche mit demselben Prozess vorteilhaft hergestellt werden können. So wird eine hohe Qualität erreicht.

Ein erfindungsgemäßes Verfahren zur Herstellung eines erfindungsgemäßen Käfigläufers weist neben den bereits angeführten Vorteilen auch den weiteren Vorteil auf, dass bestehende Werkzeuge, die durch in der Vergangenheit gewonnene Erfahrungen für eine hohe Qualität eines damit hergestellten Käfigläufers optimiert wurden, nicht oder nur durch eine oder mehrere Bohrungen in einem inneren Bereich des Werkzeugs für den Durchgang und gegebenenfalls weiteren Durchgängen für das erfindungsgemäße Verfahren zur Herstellung eines erfindungsgemäßen Käfigläufers angepasst werden müssen. Die Werkzeuge dienen zu einer Formgebung beim Gießen des Kurzschlussrings und des weiteren Kurzschlussrings.

Bei einem Verfahren zur Herstellung des Käfigläufers wird an dem ersten axialen Ende des Läuferblechpakets ein erstes Werkzeug angeordnet, das eine Form des Kurzschlussrings vorgibt. Des Weiteren wird an dem zweiten axialen Ende des Läuferblechpakets ein zweites Werkzeug angeordnet, das eine Form des weiteren Kurzschlussrings vorgibt. Vorteilhaft wird nur über eine Öffnung oder mehrere Öffnungen des ersten Werkzeugs Füllmaterial in das erste Werkzeug eingebracht und über den Durchgang zum zweiten axialen Ende gebracht. Nach einem Erstarren des Füllmaterials bildet das Füllmaterial vorteilhaft den an das Läuferblechpaket angegossenen Kurzschlussring und den an das Läuferblechpaket angegossenen weiteren Kurzschlussring. Das Füllmaterial füllt auch vorteilhaft den Durchgang und gegebenenfalls weitere Durchgänge aus.

In vorteilhafter Weise können z.B. auch bestehende Erfahrungen mit Druckgussverfahren bei dem Verfahren zur Herstellung des Käfigläufers genutzt werden, indem das Füllmaterial mit einem Druckgussverfahren in ein Werkzeug, insbesondere in das erste Werkzeug, gebracht wird. Bei einem Druckgussverfahren wird unter anderem das Füllmaterial in einem flüssigen Zustand unter hohem Druck, insbesondere im Druckbereich von 10 MPa bis 200MPa, in das Werkzeug, insbesondere in das erste Werkzeug, gebracht.

Vorteilhafte Ausgestaltungen der Erfindung sind in den abhängigen Ansprüchen angegeben.

So ist eine Ausgestaltung des erfindungsgemäßen Käfigläufers vorteilhaft, bei der das erste Material in dem Durchgang eine Querschnittsfläche ausfüllt, die größer ist als eine Querschnittsfläche, die das erste Material in einer der Nuten ausfüllt. So kann vorteilhaft durch die größere Querschnittsfläche des Durchgangs im inneren Bereich der Bleche ein größeres Volumen an Füllmaterial mit geringeren thermischen Verlusten je Volumeneinheit des Füllmaterials von dem ersten axialen Ende zum zweiten axialen Ende gebracht werden. So kann das erste Material vorteilhaft in einem ausreichend flüssigen Zustand in einer ausreichenden Menge am zweiten axialen Ende für den weiteren Kurzschlussring zur Verfügung stehen.

Es kann eine Berandung der Querschnittsfläche des Durchgangs ein Verhältnis aus Umfangslänge der Berandung zum Flächeninhalt der Querschnittsfläche aufweisen, das kleiner ist als das Verhältnis aus der Umfangslänge einer Berandung der Querschnittsfläche, die das erste Material in einer der Nuten ausfüllt, zum Flächeninhalt der Querschnittsfläche, die das erste Material in einer der Nuten ausfüllt. So sind vorteilhaft die thermischen Verluste je Volumeneinheit des Füllmaterials bei einem Transport durch den Durchgang geringer als bei einem Transport durch einen Teil einer Nut, der nach der Herstellung des Käfigläufers mit dem ersten Material ausgefüllt ist. Insbesondere kann so durch eine größere Querschnittsfläche des Durchgangs ein größter Teil des ersten Materials für den weiteren Kurzschlussring mit geringeren thermischen Verlusten zum zweiten axialen Ende gebracht werden, so dass das erste Material den weiteren Kurzschluss mit einer hohen Qualität bilden kann.

Weiterhin vorteilhaft können die Nuten zu einem geringeren Anteil als der Durchgang dazu genutzt werden, Füllmaterial von dem ersten zum zweiten axialen Ende zu bringen. So wird das Füllmaterial, insbesondere durch den Durchgang, vorteilhaft räumlich verteilt und in einem ausreichend flüssigen Zustand für die Herstellung des weiteren Kurzschlussrings zu dem zweiten axialen Ende gebracht. So wird ein Käfigläufer mit hoher Qualität erreicht.

In einer weiteren vorteilhaften Ausgestaltung eines erfindungsgemäßen Käfigläufers weisen die Bleche jeweils mindestens eine weitere Ausstanzung im inneren Bereich der Bleche auf, wobei die weitere Ausstanzung Ränder von einem offenen Durchgang bilden, der vom ersten axialen Ende zum zweiten axialen Ende verläuft. Der offene Durchgang kann vorteilhaft für andere Funktionen genutzt werden, z.B. als Aussparung im Bereich einer Öffnung für die Welle, um das Läuferblechpaket qualitativ vorteilhaft an der Welle befestigen zu können.

Die Bleche können jeweils weitere Ausstanzungen im inneren Bereich der Bleche aufweisen, wobei die weiteren Ausstanzungen Ränder von weiteren offenen Durchgängen bilden, die vom ersten axialen Ende zum zweiten axialen Ende verlaufen. Der offene Durchgang und die weiteren offenen Durchgänge können vorteilhaft zur Kühlung des Käfigläufers mit einem Fluid wie z.B. Luft genutzt werden. Der offene Durchgang und die weiteren offenen Durchgänge ermöglichen es, das Fluid in größeren Mengen durch den Käfigläufer zu leiten. So erwärmt sich im Betrieb der elektrischen Maschine der Käfigläufer in geringerem Maße. Der Käfigläufer ist so qualitativ höherwertig. Der offene Durchgang und die weiteren offenen Durchgänge sind vorteilhaft um die Drehachse verteilt angeordnet. Es wird so vorteilhaft eine gleichmäßige Kühlung des Käfigläufers erreicht.

Die Durchgänge, d.h. der Durchgang und die weiteren Durchgänge, die mit dem Füllmaterial ausgefüllt sind, und der offene Durchgang sowie die weiteren offenen Durchgänge, können so angeordnet sein, dass eine Unwucht des Käfigläufers durch eine nicht rotationssymmetrische Massenverteilung bei einer Drehung um die Drehachse minimiert ist. So kann vorteilhaft ein Käfigläufer mit einer hohen Qualität zur Verfügung gestellt werden, da die Lager, mit denen der Käfigläufer in der elektrischen Maschine gelagert ist, mit geringeren Kräften beaufschlagt werden, so dass eine Schädigung der Lager mit einer geringeren Wahrscheinlichkeit auftritt.

Die Unwucht des Käfigläufers bei der Drehung um die Drehachse kann dadurch minimiert sein, dass die Bleche bezüglich der Ausstanzungen punktsymmetrisch zu ihrem Schnittpunkt mit der Drehachse sind. So kann eine Unwucht des Käfigläufers vorteilhaft bei der Drehung um die Drehachse minimiert werden, da die Ausstanzungen mit einer hohen Qualität, z.B. durch ein Stanzwerkzeug, hergestellt werden können.

Die Durchgänge können über mehrere Radien um die Drehachse verteilt angeordnet sein. Es wird so eine vorteilhafte Verteilung der Durchgänge um die Drehachse erreicht. Die Verteilung auf mehrere Radien kann eine mechanisch stabilere Ausführung des Käfigläufers ermöglichen.

Weiterhin können andere Funktionen der offenen Durchgänge und die Nutzung der mit dem Füllmaterial ausgefüllten Durchgänge unter anderem dadurch vorteilhaft verbessert werden, dass die offenen und ausgefüllten Durchgänge auch in einer radialen Richtung gleichmäßig verteilt werden.

In einer weiteren vorteilhaften Ausgestaltung eines erfindungsgemäßen Käfigläufers ist der Durchgang in den Blechen von den Nuten getrennt. Es werden so vorteilhaft die Auswirkungen des Durchgangs auf die Nuten verringert. Unter anderem können Auswirkungen des Durchgangs auf die Nuten bei der Herstellung eines Käfigläufers auftreten. Da der Durchgang von den Nuten getrennt ist, kann das Füllmaterial in einem flüssigen Zustand nur sehr schwer von dem Durchgang direkt in die Nut gelangen. So wird ein undefiniertes Eindringen des Füllmaterials in die Nuten vorteilhaft verringert. Somit wird eine höhere Qualität des Käfigläufers erreicht.

Die Trennung kann z.B. dadurch erreicht werden, dass die ersten Ausstanzungen und die zweite Ausstanzung bei einem Blech durch eine Brücke des Blechs voneinander getrennt sind. Die ersten Ausstanzungen und die zweite Ausstanzung können so an dem Blech ausgestanzt werden, dass mindestens ein Bereich des Blechs zwischen den ersten Ausstanzungen und der zweiten Ausstanzung bestehen bleibt, der die Brücke bildet. So kann eine definierte Trennung zwischen dem Durchgang und den Nuten mit hoher Qualität erfolgen.

In einer weiteren vorteilhaften Ausgestaltung des erfindungsgemäßen Käfigläufers sind in den Nuten Stäbe aus einem zweiten Material mit einer höheren elektrischen Leitfähigkeit als eine elektrische Leitfähigkeit des ersten Materials angeordnet. So kann vorteilhaft ein Käfigläufer mit höherer Qualität zur Verfügung gestellt werden, da der Wirkungsgrad einer elektrischen Maschine mit dem Käfigläufer verbessert ist. Der Wirkungsgrad der elektrischen Maschine ist verbessert, da die Kurzschlusswicklung einen niedrigeren Widerstand aufweist. Trotz der Stäbe in den Nuten, die zu einem geringeren elektrischen Widerstand der Wicklung führen, kann vorteilhaft das erste Material in einem ausreichend flüssigen Zustand in einer ausreichenden Menge über den vorteilhaften Durchgang zum zweiten axialen Ende gebracht werden, um dort den weiteren Kurzschlussring mit einer hohen Qualität bilden zu können. Unter anderem bildet sich durch das in einem ausreichend flüssigen Zustand in einer ausreichenden Menge vorhandene erste Material beim Erstarren des ersten Materials des weiteren Kurzschlussrings eine vorteilhafte elektrische Verbindung, insbesondere innerhalb des ersten Materials, aus. So wird durch den niedrigeren elektrischen Widerstand der Kurzschlusswicklung, insbesondere durch den im Betrieb der elektrischen Maschine niedrigeren wirksamen elektrischen Widerstand der Kurzschlusswicklung, ein hoher Wirkungsgrad der elektrischen Maschine erreicht und damit eine elektrische Maschine mit hoher Qualität zur Verfügung gestellt.

Die Wicklung, die die Stäbe aufweist, weist insbesondere durch die höhere elektrische Leitfähigkeit der Stäbe einen geringeren elektrischen Widerstand im Vergleich zu einer Wicklung aus dem ersten Material mit gleichen geometrischen Abmessungen auf. Das zweite Material kann z.B. Kupfer umfassen.

Die Stäbe können einen inneren Teil der ersten Ausstanzungen einnehmen, der dem inneren Bereich der Bleche zugewandt ist. So kann vorteilhaft ein äußerer Teil der ersten Ausstanzungen mit dem ersten Material ausgefüllt sein. Weiterhin vorteilhaft kann das erste Material in dem äußeren Teil Anlaufstäbe bilden. Dies führt zu einem Käfigläufer mit höherer Qualität, da das Anlaufverhalten der elektrischen Maschine durch die Anlaufstäbe eingestellt werden kann.

Es wird auch vorteilhaft erreicht, dass bei einem Dauerbetrieb der elektrischen Maschine, bei dem im Gegensatz zu einem Anlauf der elektrischen Maschine der Strom nicht vom inneren Teil der ersten Ausstanzungen in den äußeren Teil der ersten Ausstanzungen verdrängt wird, ein möglichst großer Querschnitt mit höherer Leitfähigkeit im inneren Teil der ersten Ausstanzungen genutzt werden kann.

Die Stäbe können den inneren Teil der ersten Ausstanzungen einnehmen, wenn dort keine Materialansammlung des ersten Materials vorhanden ist. Falls dort unerwünschter Weise eine Materialansammlung vorhanden ist, sollte im inneren Teil der ersten Ausstanzungen keine Materialansammlung des ersten Materials vorhanden sein, die vom ersten axialen Ende zum zweiten axialen Ende verläuft und einstückig mit dem Kurzschlussring und dem weiteren Kurzschlussring verbunden ist.

Eine Materialansammlung im inneren Teil der ersten Ausstanzung kann dadurch vorteilhaft besser verhindert werden, dass der Durchgang in den Blechen von den Nuten getrennt ist. Es kann so vorteilhaft innerhalb eines Blechs kein erstes Material aus der zweiten Ausstanzung in die ersten Ausstanzungen gelangen.

Bei einer vorteilhaften Ausgestaltung eines erfindungsgemäßen Verfahrens zur Herstellung eines erfindungsgemäßen Käfigläufers, bei dem in den Nuten Stäbe aus einem zweiten Material mit einer höheren elektrischen Leitfähigkeit als das erste Material angeordnet sind, werden in den Nuten Stäbe aus dem zweiten Material angeordnet bevor das Füllmaterial zumindest teilweise über den Durchgang zum zweiten axialen Ende gebracht wird. Es kann vorteilhaft das erste Material in einem ausreichend flüssigen Zustand in einer ausreichenden Menge über den Durchgang zum zweiten axialen Ende gebracht werden, obwohl die Stäbe bereits in den Nuten angeordnet sind.

Bei einer weiteren vorteilhaften Ausgestaltung eines erfindungsgemäßen Verfahrens zur Herstellung eines erfindungsgemäßen Käfigläufers wird das Füllmaterial über den Durchgang und den Nuten zum axialen Ende gebracht. Dadurch kann vorteilhaft das erste Material räumlich verteilt in einem ausreichend flüssigen Zustand in einer ausreichenden Menge am zweiten axialen Ende für den weiteren Kurzschlussring zur Verfügung gestellt werden. Das erste Material kann so den weiteren Kurzschluss mit einer hohen Qualität bilden, da das erste Material eine homogenere räumliche Verteilung und eine räumlich dichtere Verteilung des ersten Materials, insbesondere mit geringerer Porosität, im weiteren Kurzschlussring aufweisen kann.

Bei einer weiteren vorteilhaften Ausgestaltung eines erfindungsgemäßen Verfahrens zur Herstellung eines erfindungsgemäßen Käfigläufers, bei dem die Stäbe einen inneren Teil der ersten Ausstanzungen einnehmen, werden in den Nuten Stäbe aus dem zweiten Material angeordnet bevor das Füllmaterial über den Durchgang und den Nuten zum axialen Ende gebracht wird, wobei in den Nuten das erste Material durch einen äußeren Teil der ersten Ausstanzungen zum axialen Ende gebracht wird. Neben den bereits beschriebenen Vorteilen eines derartigen Käfigläufers, kann sich so eine vorteilhafte elektrische Verbindung zwischen dem ersten Material und den Stäben ausbilden, da bei einem Erstarren des ersten Materials das erste Material in einem ausreichend flüssigen Zustand in einer ausreichenden Menge vorteilhaft sowohl an der Drehachse zugewandten Oberflächen der Stäbe als auch an der Drehachse abgewandten Oberflächen der Stäbe zur Verfügung steht. Insbesondere kann dadurch eine vorteilhafte elektrische Verbindung an den gesamten Oberflächen der Stabenden erreicht werden, die aus dem Läuferblechpaket in den weiteren Kurzschlussring ragen. Dies trägt vorteilhaft dazu bei, einen niedrigeren elektrischen Widerstand der Kurzschlusswicklung, insbesondere einen im Betrieb der elektrischen Maschine niedrigeren wirksamen elektrischen Widerstand der Kurzschlusswicklung, zu erreichen, um eine elektrische Maschine mit hoher Qualität zur Verfügung zu stellen.

In einer weiteren vorteilhaften Ausgestaltung eines erfindungsgemäßen Käfigläufers umschließen die Ränder des Durchgangs, die durch die zweite Ausstanzung gebildet sind, vorteilhaft das Füllmaterial im Durchgang. Es wird das Füllmaterial zum zweiten axialen Ende vorteilhaft geführt, so dass das erste Material in einem ausreichend flüssigen Zustand in einer ausreichenden Menge am zweiten axialen Ende für den weiteren Kurzschlussring zur Verfügung steht.

Bei einer vorteilhafte Ausgestaltung einer erfindungsgemäßen Serie einer erfindungsgemäßen elektrischen Maschine weist das Läuferblechpaket des ersten Käfigläufers eine erste Länge auf, die sich vom ersten axialen Ende zum zweiten axialen Ende erstreckt, und die Läuferblechpaket-Variante weist eine zweite Länge auf, die sich von dem ersten axialen Ende der Läuferblechpaket-Variante zum zweiten axialen Ende der Läuferblechpaket-Variante erstreckt, wobei die zweite Länge kleiner als die erste Länge ist. Es können vorteilhaft elektrische Maschinen unterschiedlichen Längen mit einer hohen Qualität zur Verfügung gestellt werden. Bei der ersten elektrischen Maschine kann vorteilhaft der Durchgang und gegebenenfalls weitere Durchgänge genutzt werden, um das erste Material in einem ausreichend flüssigen Zustand in einer ausreichenden Menge vom ersten zum zweiten axialen Ende zu bringen, so dass die Qualität eines weiteren Kurzschlussrings der zweiten elektrischen Maschine keine schlechtere Qualität oder unter Umständen wesentlich schlechtere Qualität aufweist, als die Qualität des weiteren Kurzschlussrings der zweiten elektrischen Maschine.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Figuren näher erläutert werden. Es zeigen:
- FIG 1: ein Ausführungsbeispiel eines Käfigläufers,
- FIG 2: einen Ansicht des Käfigläufers gemäß FIG 1 in einer axialen Richtung gesehen,
- FIG 3: einen Querschnitt entlang der Linie III-III der FIG 1,
- FIG 4: ein Ausführungsbeispiel einer Vorrichtung zur Herstellung eines Käfigläufers mit einem Läuferblechpaket und Stäben,
- FIG 5: ein Ausführungsbeispiel einer elektrischen Maschine, die den Käfigläufer gemäß FIG 1 umfasst,
- FIG 6: ein erstes Ausführungsbeispiel einer Serie von elektrischen Maschinen,
- FIG 7: ein zweites Ausführungsbeispiel einer Serie von elektrischen Maschinen,
- FIG 8: ein drittes Ausführungsbeispiel einer Serie von elektrischen Maschinen,
- FIG 9: eine Ansicht einer Käfigläufer-Variante gemäß FIG 6 in einer axialen Richtung gesehen.

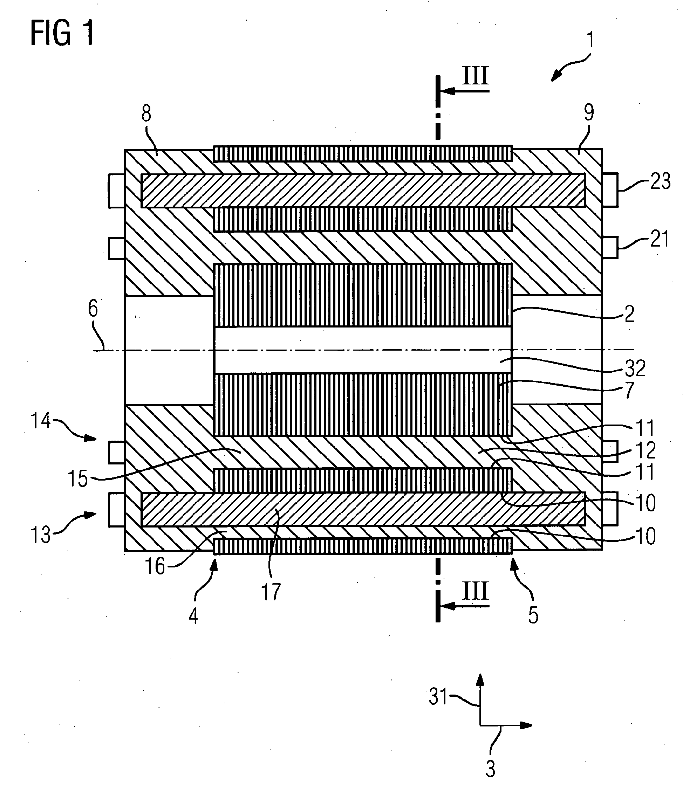

Die FIG 1 zeigt ein Ausführungsbeispiel eines Käfigläufers 1, der ein Läuferblechpaket 2 umfasst, das sich in einer axialen Richtung 3 von einem ersten axialen Ende 4 zu einem zweiten axialen Ende 5 entlang einer Drehachse 6 erstreckt und in der axialen Richtung 3 geschichtete Bleche 7 aufweist. Der Käfigläufer 1 weist außerdem einen Kurzschlussring 8 auf, der die Drehachse 6 umgibt, und an dem ersten axialen Ende 4 angeordnet ist, sowie einen weiteren Kurzschlussring 9, der die Drehachse 6 umgibt, und an dem zweiten axialen Ende 9 angeordnet ist. Der Kurzschlussring 8 und der weitere Kurzschlussring 9 umfassen ein erstes Material. Das erste Material ist zur Herstellung des Käfigläufers mit einem Druckgussverfahren geeignet und umfasst in diesem Ausführungsbeispiel Aluminium. Die Bleche 7 des Läuferblechpakets 2 weisen jeweils erste Ausstanzungen 10 auf, die Ränder von Nuten 16 des Läuferblechpakets bilden, die vom ersten axialen Ende 4 zum zweiten axialen Ende 5 verlaufen. Die Bleche 7 weisen auch jeweils eine zweite Ausstanzung 11 auf, die Ränder von einem Durchgang 12 bilden, der vom ersten axialen Ende 4 zum zweiten axialen Ende 5 verläuft. Die ersten Ausstanzungen 10 liegen in einem äußeren Bereich 13 der Bleche 7. Die zweiten Ausstanzungen 11 liegen in einem inneren Bereich 14 der Bleche 7. Der Durchgang 12 ist mit einem Füllmaterial 15 aus dem ersten Material ausgefüllt, das einstückig mit dem Kurzschlussring 8 und dem weiteren Kurzschlussring 9 verbunden ist. Das Läuferblechpaket 2 weist eine Öffnung 32 für eine Welle auf, so dass diese sich entlang der Drehachse 6 erstrecken kann.

Eine radiale Richtung 31 ist eine Richtung senkrecht zur Drehachse 6. Entfernt man sich im Läuferblechpaket 2 von der Drehachse 6 in einer radialen Richtung 31, gelangt man von dem inneren Bereich 14 der Bleche 7 in den äußeren Bereich 13 der Bleche 7.

In dem Ausführungsbeispiel des Käfigläufers 1 sind in den Nuten 16 Stäbe 17 aus einem zweiten Material mit einer höheren elektrischen Leitfähigkeit als das erste Material angeordnet. Das zweite Material ist Kupfer. Die Stäbe 17 sind in dem Ausführungsbeispiel massive Stäbe 17, damit die Stäbe 17 vorteilhaft eine maximale Querschnittsfläche aus dem zweiten Material aufweisen, um vorteilhaft ein Käfigläufer mit höherer Qualität zur Verfügung stellen zu können, da die massiven Stäbe 17 zu einem vorteilhaft geringeren elektrischen Widerstand der Wicklung führen, die die Stäbe 17 aufweist.

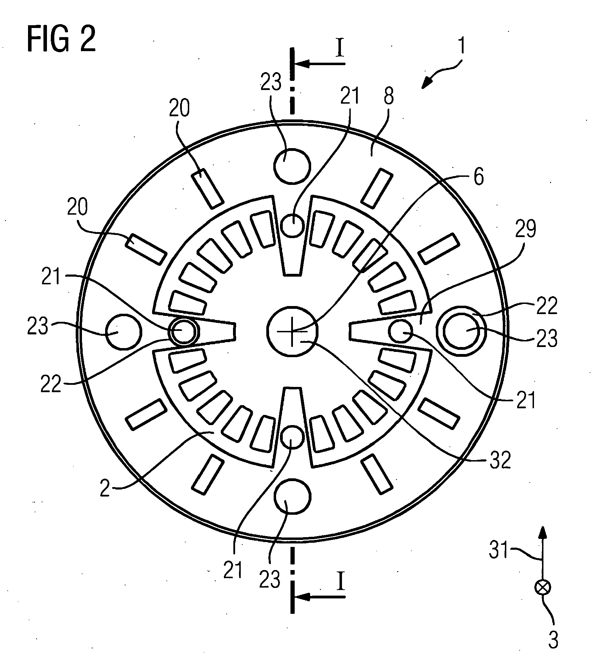

Die FIG 2 zeigt eine Ansicht des Käfigläufers 1 gemäß der FIG 1 in einer axialen Richtung 3 gesehen. Es ist das Läuferblechpaket 2 mit offenen Durchgängen zu sehen. Die offenen Durchgänge umfassen den offenen Durchgang 19 und weitere offene Durchgänge. Der Kurzschlussring 8 ist an das Läuferblechpaket 2 angegossen, so dass der Kurzschlussring 8 in radialen Richtungen über die Nuten 16 verläuft. Der Kurzschlussring 8 weist einen Steg 29 auf, der in radialen Richtungen über den Durchgang 12 verläuft. Der Steg 29 kann vorteilhaft genutzt werden, um bei einer Drehung des Käfigläufers 1 um die Drehachse 6 eine Bewegung eines Fluids, z.B. Luft, zu erzeugen, die zu einer geringeren Erwärmung des Käfigläufers 1 oder einer elektrischen Maschine mit dem Käfigläufer 1 führt. Der Steg 29 wird zusätzlich vorteilhaft genutzt, in dem durch den Steg 29 das Füllmaterial zumindest teilweise über den Durchgang 12 zum zweiten axialen Ende 5 gebracht werden kann. Zur vorteilhaften Bewegung des Fluids kann der Steg 29 in radialen Richtungen bogenförmig verlaufen.

Der Kurzschlussring 8 kann Flügel aufweisen um zusätzlich eine Erwärmung einer elektrischen Maschine mit dem Käfigläufer 1 in einem Betrieb zu verringern. Das Ausführungsbeispiel des Käfigläufers 1 umfasst Flügel 20, die einstückig mit dem Kurzschlussring 8 verbunden sind.

Der Käfigläufer 1 kann, wie dies beim Käfigläufer 1 der Fall ist, vorteilhaft radial innere Zapfen 21 auf den Stegen 29 aufweisen, um eine Unwucht des Käfigläufers 1 bei einer Drehung um die Drehachse 6 durch ein entsprechendes Anbringen einer Wuchtmasse, z.B. als Ring 22, zu verringern. Vorteilhaft kann der Käfigläufer, wie in dem Ausführungsbeispiel des Käfigläufers 1 gezeigt, radial äußere Zapfen 23 am Kurzschlussring aufweisen, an denen eine Wuchtmasse z.B. als Ring 22 zur Verringerung einer Unwucht des Käfigläufers angebracht werden kann.

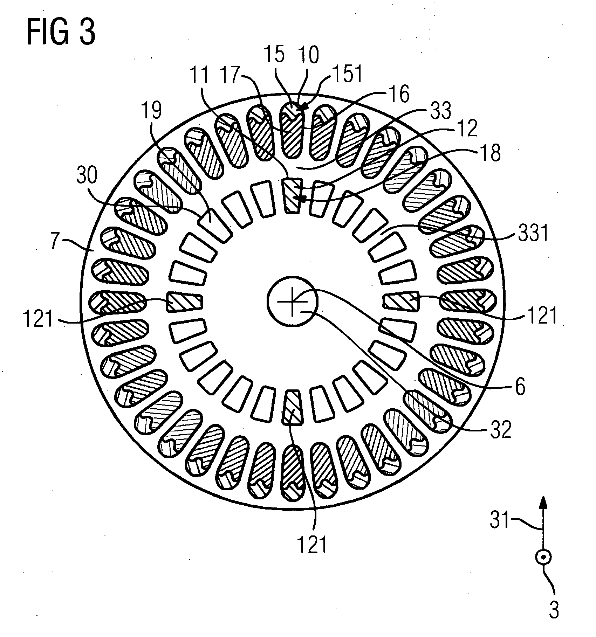

Die FIG 3 zeigt einen Querschnitt entlang der Linie III-III der FIG 1. Das Blech 7 weist neben den ersten Ausstanzungen 10 und der zweiten Ausstanzung 11 weitere Ausstanzungen auf, die in dem inneren Bereich 13 der Bleche bzw. des Bleches 7 liegen und Ränder von weiteren Durchgängen 121 bilden, die mit dem Füllmaterial 15 aus dem ersten Material ausgefüllt sind, das einstückig mit dem Kurzschlussring 8 und dem weiteren Kurzschlussring 9 verbunden ist. Der Durchgang 12 ist in dem Blech 7 von den Nuten 16 getrennt, in dem die ersten Ausstanzungen 10 und die zweite Ausstanzung 11 bei dem Blech 7 durch eine Brücke 33 des Blechs 7 voneinander getrennt sind. Indem mit dem Durchgang 12 und den weiteren Durchgängen 121 eine größere Anzahl an Durchgängen vorgesehen sind, kann eine größere Menge des ersten Materials pro Zeiteinheit vom ersten axialen Ende 4 zum zweiten axialen Ende 5 gebracht werden ohne auf eine hohe mechanische Stabilität des Käfigläufers 1 verzichten zu müssen. Die größere Anzahl an Durchgängen ermöglicht es, dass die Brücke 33 und eine radiale Brücke 331 eine kurze Erstreckung aufweisen und so eine höhere mechanische Stabilität bieten können. Die Ränder des Durchgangs 12, die durch die zweiten Ausstanzung 11 gebildet sind, umschließen das Füllmaterial, d.h. das erste Material 15, im Durchgang.

Das erste Material füllt in dem Durchgang 12 eine Querschnittsfläche 18 aus, die größer ist als eine Querschnittsfläche 151, die das erste Material in einer der Nuten 16 ausfüllt. Die Ränder einer der Nuten 16 des Läuferblechpakets 2, die durch die ersten Ausstanzungen 10 gebildet sind, umschließen die Wicklung, die den Stab 17 aufweist.

Eine Berandung der Querschnittsfläche 18 des Durchgangs 12 weist ein Verhältnis aus Umfangslänge der Berandung zum Flächeninhalt der Querschnittsfläche 18 auf, das kleiner ist als das Verhältnis aus der Umfangslänge einer Berandung der Querschnittsfläche 151, die das erste Material in einer der Nuten 16 ausfüllt, zum Flächeninhalt der Querschnittsfläche 151, die das erste Material in einer der Nuten 16 ausfüllt.

Die Querschnittsfläche 18 des Durchgangs 12 ist in FIG 3 schraffiert gezeichnet und wird durch ihre Berandung umschlossen, die die Querschnittsfläche 18 des Durchgangs 12 gegenüber den Blech 7 abgrenzt. Die Querschnittsfläche 151, die das erste Material in einer der Nuten 16 ausfüllt, ist in FIG 3 schraffiert gezeichnet und wird durch ihre Berandung umschlossen. In diesem Ausführungsbeispiel grenzt die Berandung die Querschnittsfläche 151, die das erste Material in einer der Nuten 16 ausfüllt, gegenüber den Blech 7 und den Stab 17 ab.

Das Blech 7 weist eine weitere Ausstanzung 30 im inneren Bereich 14 des Bleches 7 auf, wobei die weitere Ausstanzung 30 Ränder von dem offenen Durchgang 19 bildet, der vom ersten axialen Ende 4 zum zweiten axialen Ende 5 verläuft. Der offene Durchgang 19 und weitere offenen Durchgänge können vorteilhaft zur Kühlung des Käfigläufers 1 mit Luft genutzt werden.

Die Durchgänge, d.h. der Durchgang 12 und die weiteren Durchgänge 121, die mit dem Füllmaterial 15 ausgefüllt sind und der offene Durchgang 19 sowie die weiteren offenen Durchgänge, sind so angeordnet, dass eine Unwucht des Käfigläufers 1 durch eine nicht rotationssymmetrische Massenverteilung bei einer Drehung um die Drehachse 6 minimiert ist.

Die Unwucht des Käfigläufers 1 bei der Drehung um die Drehachse 6 ist dadurch minimiert, dass die Bleche 7 bezüglich der Ausstanzungen 10,11,30 punktsymmetrisch zu ihrem Schnittpunkt mit der Drehachse 6 sind. In der FIG 3 ist aufgrund einer Querschnittsansicht die Drehachse 6 nur mit ihrem Schnittpunkt mit dem Blech 7 eingezeichnet.

Ein Stab 17 der Stäbe 17 nimmt einen inneren Teil einer der ersten Ausstanzung 10 ein, der dem inneren Bereich 14 des Bleches 7 zugewandt ist. Das erste Material bildet in einem äußeren Teil einer der ersten Ausstanzung 10 einen Anlaufstab, in das erste Material die Fläche 151 in der ersten Ausstanzung 10 ausfüllt.

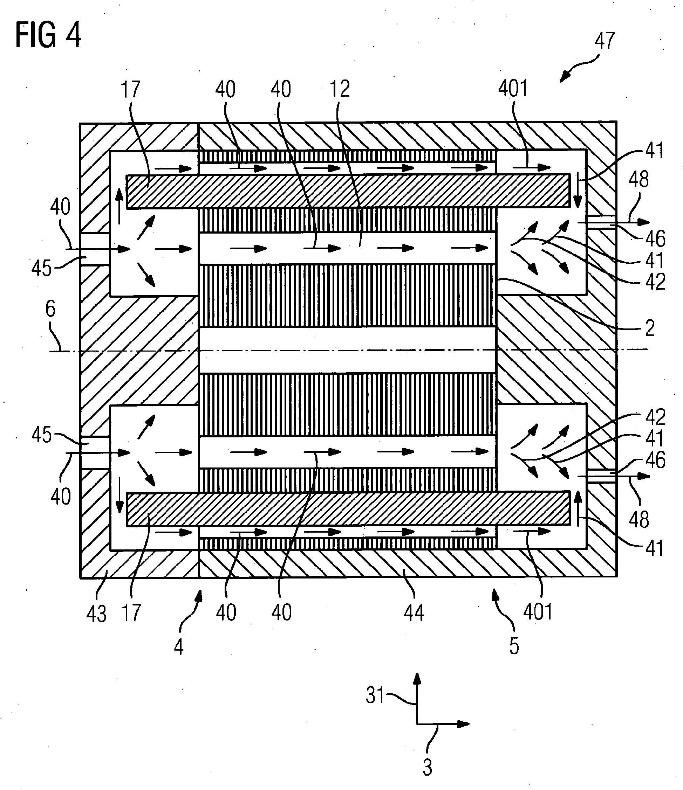

Die FIG 4 zeigt ein Ausführungsbeispiel einer Vorrichtung 47 zur Herstellung eines Käfigläufers 1 mit einem Läuferblechpaket 2 und Stäben 17. Die Vorrichtung 47 umfasst ein erstes Werkzeug 43 und ein zweites Werkzeug 44. In der FIG 4 wird das Füllmaterial durch Pfeile repräsentiert, die die Fließrichtung 40, 41, 42, 401 des Füllmaterials 15 in einem flüssigen Zustand darstellen.

Bei einem Ausführungsbeispiel eines Verfahrens zur Herstellung des Käfigläufers 1 wird an dem ersten axialen Ende 4 des Läuferblechpakets 2 ein erstes Werkzeug 43 angeordnet, das eine Form des Kurzschlussrings 8 vorgibt. Des Weiteren wird an dem zweiten axialen Ende 5 des Läuferblechpakets 2 ein zweites Werkzeug 44 angeordnet, das eine Form des weiteren Kurzschlussrings 9 vorgibt. Es wird über mehrere Öffnungen 45 des ersten Werkzeugs 43 Füllmaterial 15 in das erste Werkzeug 43 eingebracht und über den Durchgang 12 zum zweiten axialen Ende 5 gebracht. Nach einem Erstarren des Füllmaterials 15 bildet das Füllmaterial 15 den an dem Läuferblechpaket 2 angegossenen Kurzschlussring 8 und den an dem Läuferblechpaket 2 angegossenen weiteren Kurzschlussring 9. Das Füllmaterial 15 füllt auch den Durchgang 12 und die weiteren Durchgänge 121 aus.

Bevor das Füllmaterial 15 zumindest teilweise über den Durchgang 19 zum zweiten axialen Ende 5 gebracht wird, werden in den Nuten 16 Stäbe 17 aus dem zweiten Material angeordnet. Bei dem Ausführungsbeispiel wird das Füllmaterial 15 mit einem Druckgussverfahren in die Fließrichtung 40 in das erste Werkzeug 43 eingebracht und über den Durchgang 12 und den Nuten 16 zum axialen Ende 5 gebracht, wobei in den Nuten 16 das erste Material durch den äußeren Teil der Ausstanzungen zum axialen Ende 15 gebracht wird. Das Füllmaterial 15 wird so über den Durchgang 12 und die Nuten 16 zum axialen Ende 15 gebracht, dass die Fließrichtung 401 des flüssigen Füllmaterials an einer der Drehachse 6 abgewandten Oberfläche des Stabes 17 verläuft, die Fließrichtung 42 des flüssigen Füllmaterials 15 gegen eine der Drehachse 6 zugewandten Oberfläche des Stabes 17 verläuft und Fließrichtungen 41 an einem Stabende des Stabes 17 verlaufen. So kann bei einem Erstarren des ersten Materials das erste Material in einem ausreichend flüssigen Zustand, d.h. mit einer ausreichend hohen Temperatur, in einer ausreichenden Menge vorteilhaft sowohl an der der Drehachse 9 zugewandten Oberfläche des Stabes 17 als auch an der der Drehachse 9 abgewandten Oberfläche des Stabes 17 zur Verfügung stehen.

Das zweite Werkstück 44 weist Entlüftungsöffnungen 46 auf, über die beim Einbringen des Füllmaterials 15 in das erste Werkzeug 43 ein Gas, z.B. Luft, aus dem zweiten Werkzeug 44 entweichen kann.

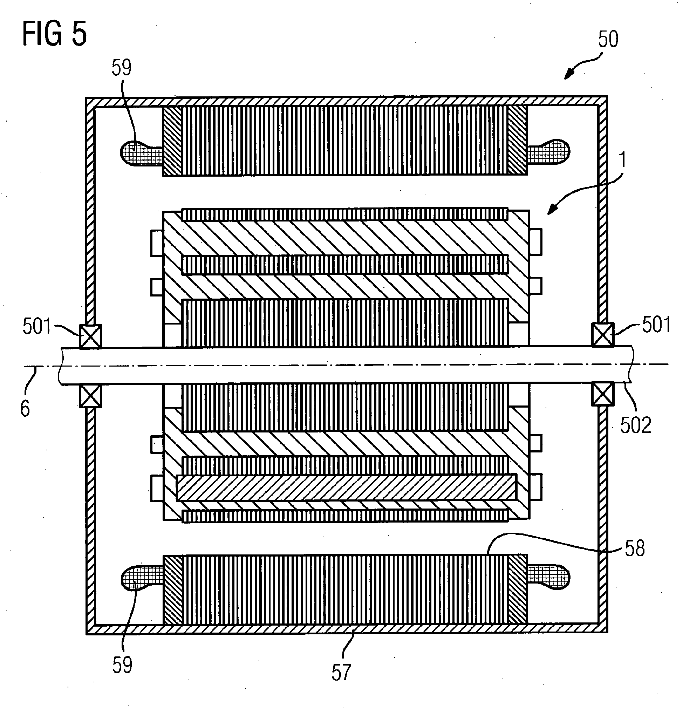

Die FIG 5 zeigt ein Ausführungsbeispiel einer elektrischen Maschine 50, die eine Asynchronmaschine ist und den Käfigläufer 1 gemäß FIG 1 umfasst. Die elektrische Maschine 50 weist zu ihrem eigenen Schutz ein Gehäuse 57 auf, in dem ein Stator 58 angeordnet ist und in dem der Käfigläufer 1 zwischen dem Stator 50 drehbar gelagert ist. Die drehbare Lagerung des Käfigläufers 1 erfolgt über die Welle 502 durch Lager 501, z.B. Wälzlager, im Gehäuse 57. Der Stator 58 weist Wicklungen 59 auf, deren Wicklungsköpfe in der FIG 5 zu sehen sind. Über die Wicklungen 59 kann in einem Betrieb der elektrischen Maschine 50 elektrische Energie zugeführt werden oder entnommen werden.

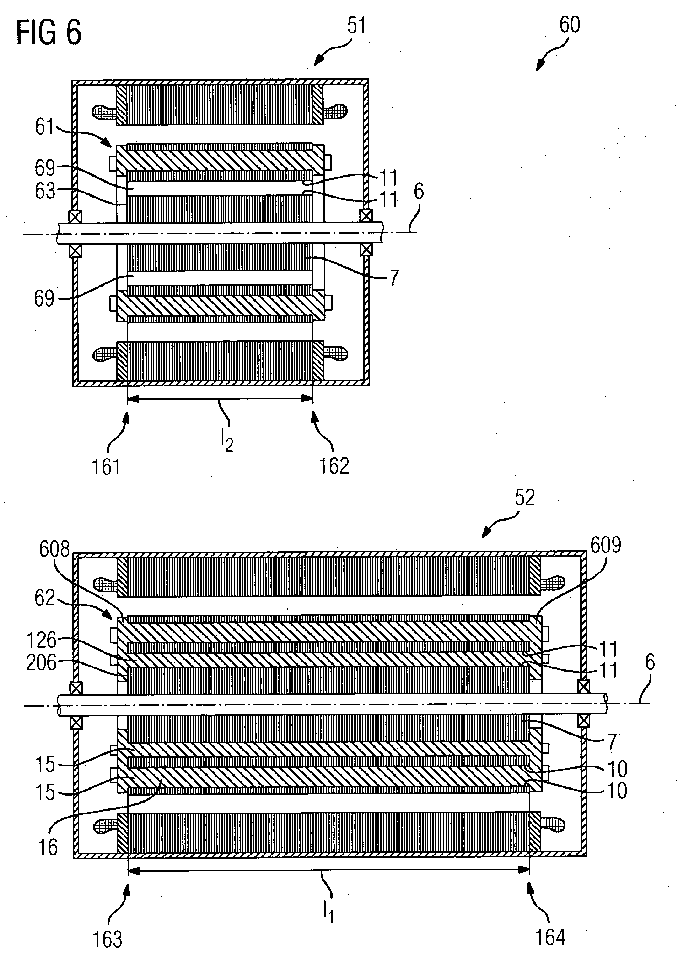

Die FIG 6 zeigt ein erstes Ausführungsbeispiel einer Serie 60 von elektrischen Maschinen 51,52. Die erste elektrische Maschine 52 weist einen Aufbau wie das Ausführungsbeispiel der elektrischen Maschine gemäß der FIG 5 auf. So weist die elektrische Maschine 52 einen ersten Käfigläufer 62 auf, der wie das Ausführungsbeispiel des Käfigläufers gemäß der FIG 1 aufgebaut ist, wobei einige Abweichungen vorhanden sind, die nachfolgend beschrieben werden:

Der erste Käfigläufer 62 umfasst einen Kurzschlussring 608, der an dem ersten axialen Ende 163 angeordnet ist und einen weiteren Kurzschlussring 609, der an dem zweiten axialen Ende 164 angeordnet ist. Ein Läuferblechpaket 206 des ersten Käfigläufers 62 weist eine erste Länge l₁ auf, die sich von dem ersten axialen Ende 163 zum zweiten axialen Ende 164 erstreckt. Die Bleche 7 weisen jeweils erste Ausstanzungen 10 auf, die Ränder der Nuten 16 des Läuferblechpakets 206 bilden. Die Nuten 16 des Läuferblechpakets 206 sind mit dem Füllmaterial 15 aus dem ersten Material ausgefüllt. Die Bleche 7 weisen jeweils die zweite Ausstanzung 11 auf, die Ränder von einem Durchgang 126 bilden, der vom ersten axialen Ende 163 zum zweiten axialen Ende 164 verläuft. Der Durchgang 126 ist mit dem Füllmaterial 15 aus dem ersten Material ausgefüllt, das einstückig mit dem Kurzschlussring 608 und dem weiteren Kurzschlussring 609 verbunden ist.

Die zweite elektrische Maschine 51 weist auch einen Aufbau wie das Ausführungsbeispiel der elektrischen Maschine gemäß der FIG 5 aufgebaut. Die zweite elektrische Maschine 51 weist eine Käfigläufer-Variante 61 auf, die wie das Ausführungsbeispiel des Käfigläufers gemäß der FIG 1 aufgebaut ist, wobei zumindest die nachfolgend beschriebenen Unterschiede vorhanden sind:
Die jeweils zweite Ausstanzung 11 der Bleche 7 bildet Ränder von einem offenen Durchgang 69 einer Läuferblechpaket-Variante 63, der von einem ersten axialen Ende 161 der Läuferblechpaket-Variante 63 zum zweiten axialen Ende 162 der Läuferblechpaket-Variante 63 verläuft. Die Läuferblechpaket-Variante 63 weist eine zweite Länge l₂ auf, die sich von dem ersten axialen Ende 161 der Läuferblechpaket-Variante 63 zum zweiten axialen Ende 162 der Läuferblechpaket-Variante 63 erstreckt, wobei die zweite Länge l₂ kleiner ist als die erste Länge l₁. Die zweite Länge l₂ kann z.B. Werte aufweisen, die kleiner als die Hälfte des Wertes der ersten Länge l₁

So kann vorteilhaft der Durchgang 126 oder die weiteren Durchgänge können im erforderlichen Maße für eine Herstellung einer längeren ersten elektrischen Maschine 52 der Serie 60 vorteilhaft herangezogen werden, um das Füllmaterial 15 zumindest teilweise über die Durchgänge vom ersten axialen Ende 163 zum zweiten axialen Ende 164 zu bringen. Zum Zwecke der Erläuterung wird in diesem Absatz nachfolgend angenommen, dass die FIG 3 beispielhaft einen entsprechenden Querschnitt des ersten Käfigläufers 62 darstellt. Bezeichnungen die in diesem Absatz nicht mit Bezugszeichen versehen sind, sind im Zweifel über deren Bedeutung entsprechend ihrer Bezeichnung beispielhaft der FIG 3 und der dazugehörigen Beschreibung entnehmbar. Das genannte erforderliche Maß ist durch die Bedingung vorgegeben, dass das erste Material in einem ausreichend flüssigen Zustand in einer ausreichenden Menge am zweiten axialen Ende 164 für den weiteren Kurzschlussring 609 zur Verfügung steht. Abhängig von einer Querschnittsfläche einer der Durchgänge, die sich bei einer Herstellung des ersten Käfigläufers 62 für einen Transport des Füllmaterials 15 zum zweiten axialen Ende 164 anbieten, kann die Anzahl der Durchgänge, über die das Füllmaterial 15 zum zweiten axialen Ende 164 gebracht wird, vorteilhaft festgelegt werden, so dass das erste Material in einem ausreichend flüssigen Zustand in einer ausreichenden Menge am zweiten axialen Ende 164 des Läuferblechpakets 206 des ersten Käfigläufers 62 für den weiteren Kurzschlussring 609 zur Verfügung steht. Wie bereits im Zusammenhang mit dem Ausführungsbeispiel des Käfigläufers 1 anhand der FIG 3 beschrieben, sollten die Durchgänge, die mit dem Füllmaterial 15 ausgefüllt sind, so in ihrer Anordnung um die Drehachse 6 vorteilhaft festgelegt werden, dass eine Unwucht des Käfigläufers 62 durch eine nicht rotationssymmetrische Massenverteilung bei einer Drehung um die Drehachse 6 minimiert ist.

Es können auch vorteilhaft für eine erfindungsgemäße Serie von elektrischen Maschinen Bleche verwendet werden, die weitere zweite Ausstanzungen in einem inneren Bereich der Bleche aufweisen, die jeweils Ränder von Durchgängen unterschiedlicher Querschnittsfläche bilden, so dass nach einem Ausfüllen der Durchgänge mit dem Füllmaterial das erste Material in einen der Durchgänge eine Querschnittsfläche mit einem anderen Flächeninhalt ausfüllt als in einem anderen der Durchgänge. Insbesondere kann vorteilhaft das Verhältnis aus Umfangslänge einer Berandung des jeweiligen Durchgangs zum Flächeninhalt der Querschnittsfläche des jeweiligen Durchgangs bei den Durchgängen unterschiedlich sein.

So kann in dem Ausführungsbeispiel der Serie 60 von elektrischen Maschinen 51,52 das Blech 7 eine um die Drehachse 6 verlaufende Anordnung der zweiten Ausstanzung 11 und weiteren zweiten Ausstanzungen aufweisen, die Ränder von ersten Durchgängen 126 mit einem ersten Flächeninhalt und Ränder von zweiten Durchgängen mit einem zweiten größeren Flächeninhalt bilden, wobei die ersten Durchgänge 126 und die zweiten Durchgänge wechselweise um die Drehachse 6 angeordnet sind. Die Bedingung, dass das erste Material in einem ausreichend flüssigen Zustand in einer ausreichenden Menge am zweiten axialen Ende 164 für den weiteren Kurzschlussring 609 zur Verfügung steht, könnte so vorteilhaft erreicht werden, indem das Füllmaterial 15 über die zweiten Durchgänge mit den zweiten größeren Flächeninhalt vom ersten axialen Ende 163 zum zweiten axialen Ende 164 gebracht wird, da dann vorteilhaft die thermischen Verlusten je Volumeneinheit des Füllmaterials 15 bei einem Transport des Füllmaterials 15 durch das längere Läuferblechpaket 206 reduziert werden können. So kann das erste Material vorteilhaft in einem ausreichend flüssigen Zustand in einer ausreichenden Menge am zweiten axialen Ende 164 für den weiteren Kurzschlussring 609 zur Verfügung stehen.

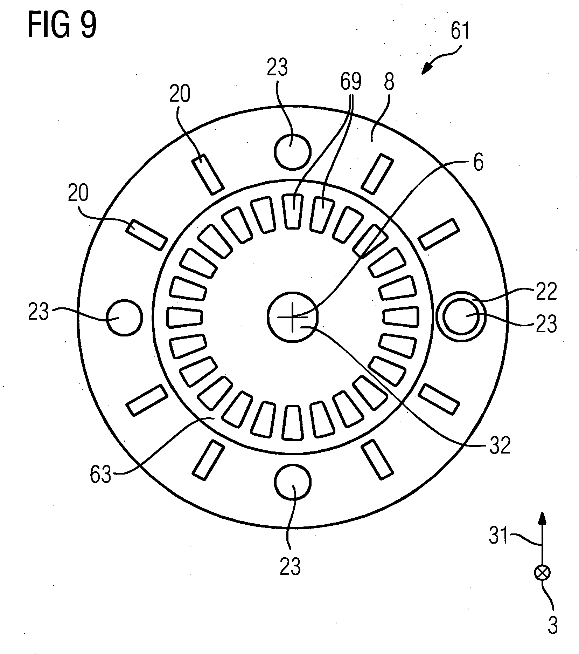

Die FIG 9 zeigt eine Ansicht der Käfigläufer-Variante 61 gemäß FIG 6 in einer axialen Richtung 3 gesehen. Die FIG 9 zeigt, dass die Käfigläufer-Variante 61 mehrere offene Durchgänge 69 aufweist und keinen ausgefüllten Durchgang, der mit einem Füllmaterial 15 aus dem ersten Material ausgefüllt ist. Insbesondere keinen ausgefüllten Durchgang, bei dem das Füllmaterial 15 einstückig mit einem Kurzschlussring und einem weiteren Kurzschlussring verbunden ist.

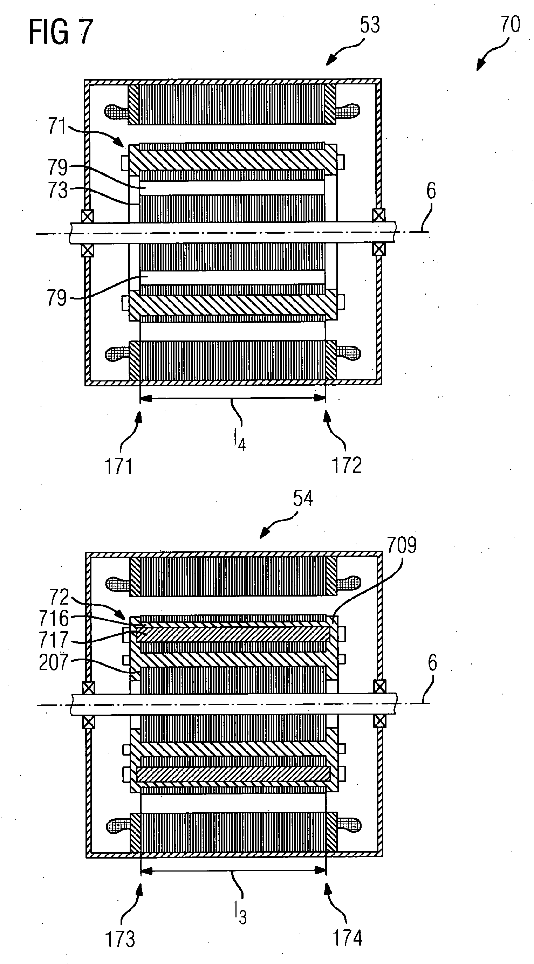

Die FIG 7 zeigt ein zweites Ausführungsbeispiel einer Serie 70 von elektrischen Maschinen 53,54. Die Serie 70 umfasst mindestens eine erste elektrische Maschine 54, die einen Aufbau wie das Ausführungsbeispiel der elektrischen Maschine gemäß der FIG 5 aufweist. Die erste elektrische Maschine 54 weist einen ersten Käfigläufer 54 auf, der wie das Ausführungsbeispiel des Käfigläufers 1 der FIG 1 aufgebaut ist. Ein Läuferblechpaket 207 des ersten Käfigläufers 72 weist eine dritte Länge l₃ auf, die sich von einem ersten axialen Ende 173 zu einem zweiten axialen Ende 174 erstreckt. In Nuten 716 sind Stäbe 717 aus einem zweiten Material mit einer höheren elektrischen Leitfähigkeit als eine elektrische Leitfähigkeit des ersten Materials angeordnet.

Die Serie 70 von elektrischen Maschinen 53,54 weist mindestens eine zweite elektrische Maschine 53 auf, die wie die erste elektrische Maschine 52 der Serie 60 des Ausführungsbeispiels der FIG 6 aufgebaut ist, wobei die zweite elektrische Maschine 53 der FIG 7 eine Käfigläufer-Variante 71 mit einer Läuferblechpaket-Variante 73 aufweist, die mehrere offene Durchgänge 79 aufweist aber keine ausgefüllten Durchgänge, die mit dem Füllmaterial 15 aus dem ersten Material ausgefüllt sind. Insbesondere sind keine Durchgänge vorhanden, bei denen das Füllmaterial einstückig mit einem Kurzschlussring und mit einem weiteren Kurzschlussring verbunden ist. Die Läuferblechpaket-Variante 73 weist eine vierte Länge l₄ auf, die sich von einem ersten axialen Ende 171 der Läuferblechpaket-Variante 73 zu einem zweiten axialen Ende 172 der Läuferblechpaket-Variante 73 erstreckt, wobei die dritte Länge l₃ im Wesentlichen gleich der vierten Länge l₄ ist. Im Wesentlich heißt, dass sich die dritte Länge l₃ von der vierten Länge l₄ maximal um 10 % der dritten Länge l₃ unterscheidet. Trotz der Stäbe 717 in den Nuten 716 kann vorteilhaft das erste Material in einem ausreichend flüssigen Zustand in einer ausreichenden Menge über den vorteilhaften Durchgang zum zweiten axialen Ende 174 gebracht werden, um dort einen weiteren Kurzschlussring 709 des ersten Käfigläufers 72 mit einer hohen Qualität bilden zu können.

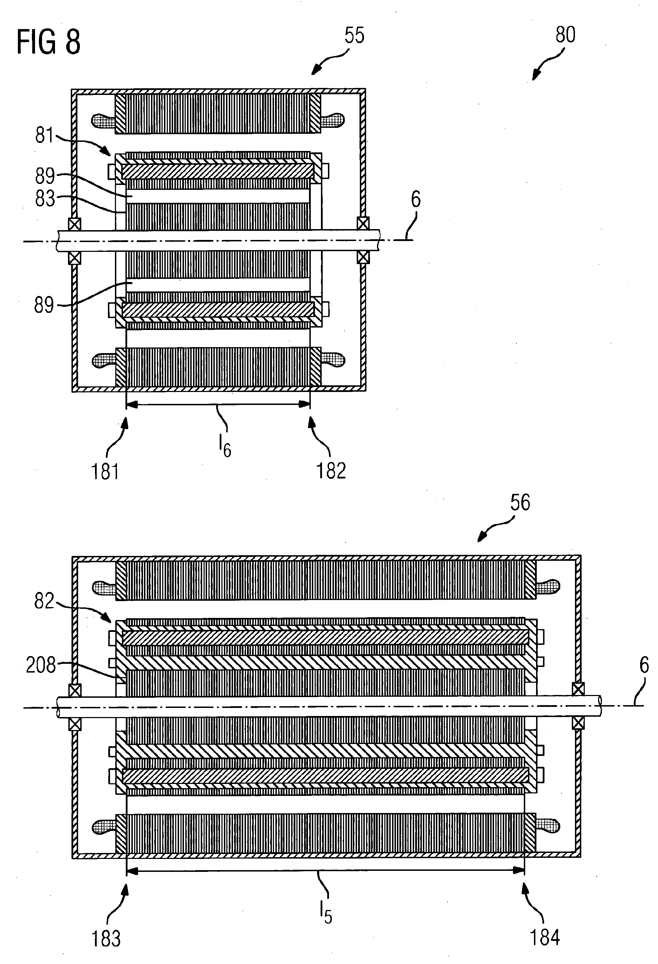

Die FIG 8 zeigt ein drittes Ausführungsbeispiel einer Serie 80 von elektrischen Maschinen 55,56. Die Serie 80 von elektrischen Maschinen 55,56 umfasst eine erste elektrische Maschine 56, die einen Aufbau wie das Ausführungsbeispiel der elektrischen Maschine 50 der FIG 5 aufweist. Die erste elektrische Maschine 56 weist einen ersten Käfigläufer 82 auf, der wie das Ausführungsbeispiel des Käfigläufers gemäß der FIG 1 aufgebaut ist. Bei dem ersten Käfigläufer 82 ist eine größere Anzahl an Durchgängen mit einem Füllmaterial 15 aus dem ersten Material ausgefüllt, wobei das Füllmaterial einstückig mit einem Kurzschlussring und einem weiteren Kurzschlussring verbunden ist. Obwohl eine fünfte Länge l₅ ca. doppelt so groß ist wie eine dritte Länge l₃, kann das erste Material in einem ausreichend flüssigen Zustand in einer ausreichenden Menge von einem ersten axialen Ende 183 eines Läuferblechpakets 208 zu einem zweiten axialen Ende 184 des Läuferblechpakets 208 gebracht werden, ohne dass die Qualität eines weiteren Kurzschlussrings der ersten elektrischen Maschine eine schlechtere Qualität aufweist als die Qualität des weiteren Kurzschlussrings der ersten elektrischen Maschine 54 gemäß der FIG 7. Dies wird dadurch vorteilhaft erreicht, dass eine Anzahl der mit dem Füllmaterial ausgefüllten Durchgänge des ersten Käfigläufers 82 gemäß der FIG 8 größer als eine Anzahl der mit dem Füllmaterial ausgefüllten Durchgänge des ersten Käfigläufers 72 gemäß der FIG 7 ist oder dass das erste Material in jeweiligen Durchgängen des ersten Käfigläufers 82 gemäß der FIG 8 eine Querschnittsfläche ausfüllt, deren Flächeninhalt größer ist als der Flächeninhalt einer Querschnittsfläche, die das Füllmaterial in jeweiligen Durchgängen des ersten Käfigläufers 82 gemäß der FIG 8 ausfüllt. Vorteilhaft kann beides zutreffen, d.h. sowohl die Anzahl der ausgefüllten Durchgänge als auch die Querschnittsfläche ist unterschiedlich. Die fünfte Länge l₅ erstreckt sich von dem ersten axialen Ende 183 zu dem zweiten axialen Ende 184 des Läuferblechpakets 208.

Die Serie 80 von elektrischen Maschinen 55,56 weist eine zweite elektrische Maschine 55 auf, die einen Aufbau wie die zweite elektrische Maschine 51 gemäß der FIG 6 aufweist. Bei der zweiten elektrischen Maschine 55 sind jedoch Stäbe aus einem zweiten Material mit einer höheren elektrischen Leitfähigkeit als das erste Material angeordnet. Die zweite elektrische Maschine 55 weist eine Käfigläufer-Variante 81 mit einer Läuferblechpaket-Variante 83 auf. Offene Durchgänge 89 der Läuferblechpaket-Variante 81 verlaufen von einem ersten axialen Ende 181 der Läuferblechpaket-Variante 83 zu einem zweiten axialen Ende 182 der Läuferblechpaket-Variante 83. Eine sechste Lände l₆ erstreckt sich von dem ersten axialen Ende 181 zu dem zweiten axialen Ende 182 der Läuferblechpaket-Variante 83. Die sechste Länge l₆ ist kleiner als ca. die Hälfte der fünften Länge l₅.

In einem weiteren Ausführungsbeispiel umfasst eine Serie von elektrischen Maschinen 51,52,53,54,55,56 eine erste elektrische Maschine 52, eine zweite elektrische Maschine 51, eine dritte elektrische Maschine 54, eine vierte elektrische Maschine 53, eine fünfte elektrische Maschine 56 und eine sechste elektrische Maschine 55. Die Durchnummerierung der elektrischen Maschinen 51,52,53,54,55,56 erfolgte dabei entsprechend der Zählweise bei den Längen l₁, l₂, l₃, l₄, l₅, l₆ der Läuferblechpakete 206,207,208 bzw. der Läuferblechpaket-Varianten 63,73,83 der FIG 6,7 und 8. Die sechs elektrischen Maschinen der Serie sind die elektrischen Maschinen der FIG 6,7 und 8. Zur Unterscheidung der Käfigläufer 62,72,82, der Käfigläufer-Varianten 61,71,81, der Läuferblechpakete 206,207, 208 und der Läuferblechpaket-Varianten 63,73,83 werden diese einheitlich mit der Ordnungszahl der elektrischen Maschine gefolgt von Käfigläufer bzw. Läuferblechpaket bezeichnet. Die erste elektrische Maschine 52 weist damit eine erste Käfigläufer-Variante 62 und eine erste Läuferblechpaket-Variante 206 auf.

Die Ausführungsbeispiele von Käfigläufern 51,52,53,54,55 weisen Bleche 7 auf, die alle bezüglich der ersten Ausstanzungen 10, der zweiten Ausstanzung 11, weiteren Ausstanzungen 30, weiteren Ausstanzungen, die Ränder von weiteren Durchgängen 121 bilden, und der weiteren zweiten Ausstanzungen, die jeweils Ränder von Durchgängen unterschiedlicher Querschnittsfläche bilden, hinsichtlich Lage und Größe identisch ausgeführt sind.

Obwohl die Erfindung im Detail durch bevorzugte Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Käfigläufer (1, 62, 72, 82) für eine elektrische Maschine (50, 52, 54, 56), der
- ein Läuferblechpaket (2, 206, 207, 208), das sich in einer axialen Richtung (3) von einem ersten axialen Ende (4, 163, 173, 183) zu einem zweiten axialen Ende (5, 164, 174, 184) entlang einer Drehachse (6) erstreckt und das in der axialen Richtung (3) geschichtete Bleche (7) aufweist,
- einen Kurzschlussring (8), der die Drehachse (6) umgibt und der an dem ersten axialen Ende (4, 163, 173, 183) angeordnet ist, und
- einen weiteren Kurzschlussring (9), der die Drehachse (6) umgibt und der an dem zweiten axialen Ende (5, 164, 174, 184) angeordnet ist,
umfasst,
- wobei der Kurzschlussring (8) und der weitere Kurzschlussring (9) ein erstes Material umfassen,
- wobei die Bleche (7) jeweils erste Ausstanzungen (10) aufweisen, die Ränder von Nuten (16) des Läuferblechpakets (2, 206, 207, 208) bilden, die vom ersten axialen Ende (4, 163, 173, 183) zum zweiten axialen Ende (5, 164, 174, 184) verlaufen,
- wobei die Bleche (7) jeweils eine zweite Ausstanzung (11) aufweisen, die Ränder von einem Durchgang (12, 126) bilden, der vom ersten axialen Ende (4, 163, 173, 183) zum zweiten axialen Ende (5, 164, 174, 184) verläuft,
- wobei die ersten Ausstanzungen (10) in einem äußeren Bereich (13) der Bleche (7) liegen und die zweite Ausstanzung (11) in einem inneren Bereich der Bleche (7) liegt,
- wobei der Durchgang (12, 126) mit einem Füllmaterial (15) aus dem ersten Material ausgefüllt ist, das einstückig mit dem Kurzschlussring (8) und dem weiteren Kurzschlussring (9) verbunden ist,
**dadurch gekennzeichnet, dass die Nuten (16) mit dem Füllmaterial (15) ausgefüllt sind,**
**oder in den Nuten (16) Stäbe (17) aus einem zweiten Material mit einer höheren elektrischen Leitfähigkeit als eine elektrische Leitfähigkeit des ersten Materials angeordnet sind und die Stäbe (17) einen inneren Teil der ersten Ausstanzungen (10) einnehmen, der dem inneren Bereich der Bleche (7) zugewandt ist und ein äußerer Teil der ersten Ausstanzungen (10) mit dem ersten Material ausgefüllt ist.**

2. Käfigläufer (1, 62, 72, 82) nach Anspruch 1, wobei das erste Material in dem Durchgang (12, 126) eine Querschnittsfläche (18) ausfüllt, die größer ist als eine Querschnittsfläche (151), die das erste Material in einer der Nuten (16) ausfüllt.

3. Käfigläufer (1,62,72,82) nach Anspruch 1 oder 2, wobei die Bleche (7) mindestens jeweils eine weitere Ausstanzung (30) im inneren Bereich (14) der Bleche (7) aufweisen, wobei die weitere Ausstanzung (30) Ränder von einem offenen Durchgang (19) bilden, der vom ersten axialen Ende (4) zum zweiten axialen Ende (5) verläuft

4. Käfigläufer (1,62,72,82) nach einem der vorhergehenden Ansprüche, wobei der Durchgang (12) in den Blechen (7) von den Nuten (16) getrennt ist.

5. Käfigläufer (1,62,72,82) nach einem der vorhergehenden Ansprüche, wobei die Ränder des Durchgangs (12, 126), die durch die zweiten Ausstanzung (11) gebildet sind, das Füllmaterial (15) im Durchgang (12, 126) umschließen.

6. Elektrische Maschine (50, 52, 54, 56), umfassend einen Käfigläufer (1,62,72,82) nach einem der vorhergehenden Ansprüche.

7. Verfahren zur Herstellung eines Käfigläufers (1, 62, 72, 82) nach einem der Ansprüche 1 bis 5, wobei das Füllmaterial (15) zumindest teilweise über den Durchgang (12, 126) zum zweiten axialen Ende (5, 164, 174, 184) gebracht wird, wobei **das Füllmaterial (15) über den Durchgang (126) und den Nuten (16) zum axialen Ende (5, 174, 184) gebracht wird, wobei die Nuten (16) mit dem Füllmaterial (15) ausgefüllt werden,**
**oder**
**zur Herstellung des Käfigläufers (1, 72, 82), bei dem die Stäbe (17) einen inneren Teil der ersten Ausstanzungen (10) einnehmen, in den Nuten (16) Stäbe (17) aus dem zweiten Material angeordnet werden bevor das Füllmaterial (15) über den Durchgang (12) und den Nuten (17) zum axialen Ende (164) gebracht wird, wobei in den Nuten (17) das erste Material durch einen äußeren Teil der ersten Ausstanzungen (10) zum axialen Ende (164) gebracht wird.**

8. Serie (60, 70, 80) von elektrischen Maschinen (51, 52, 53, 54, 55, 56) umfassend mindestens eine erste elektrische Maschine (52, 54, 56), die einen ersten Käfigläufer (62, 72, 82) nach einem der Ansprüche 1 bis **5** aufweist, und mindestens eine zweite elektrische Maschine (51, 53, 55),
- wobei die zweite elektrische Maschine (51, 53, 55) eine Käfigläufer-Variante (61, 71, 81) mit einer Läuferblechpaket-Variante (63, 73, 83) aufweist, die Bleche (7) mit jeweils ersten Ausstanzungen (10) und jeweils einer zweiten Ausstanzung (11) wie die Bleche (7) des ersten Käfigläufers (62, 72, 82) aufweisen,wobei die jeweils ersten Ausstanzungen (10) der Bleche (7) Ränder von Nuten (16) der Läuferblechpaket-Variante (63, 73, 83) bilden, die von einem ersten axialen Ende (161, 171, 181) der Läuferblechpaket-Variante (63, 73, 83) zu einem zweiten axialen Ende der Läuferblechpaket-Variante (63, 73, 83) verlaufen,wobei die jeweils zweite Ausstanzung (11) der Bleche (7) Ränder von einem offenen Durchgang (69, 79, 89) der Läuferblechpaket-Variante (63, 73, 83) bilden, der vom ersten axialen Ende (161, 171, 181) der Läuferblechpaket-Variante (63, 73, 83) zum zweiten axialen Ende (162, 172, 182) der Läuferblechpaket-Variante (63, 73, 83) verläuft.

9. Serie (60, 80) von elektrischen Maschinen (51, 52, 55, 56) nach Anspruch **8,**
- wobei das Läuferblechpaket (206, 208) des ersten Käfigläufers (62, 82) eine erste Länge aufweist, die sich vom ersten axialen Ende (163, 183) zum zweiten axialen Ende (164, 184) erstreckt, und die Läuferblechpaket-Variante (63, 83) eine zweite Länge aufweist, die sich von dem ersten axialen Ende der Läuferblechpaket-Variante (161, 181) zum zweiten axialen Ende (162, 182) der Läuferblechpaket-Variante (63, 83) erstreckt,wobei die zweite Länge kleiner als die erste Länge ist.

## Claims

1. Cage rotor (1, 62, 72, 82) for an electric machine (50, 52, 54, 56), which comprises
- a laminated rotor core (2, 206, 207, 208) which extends in an axial direction (3) from a first axial end (4, 163, 173, 183) to a second axial end (5, 164, 174, 184) along a rotational axis (6) and which has stacked laminations (7) in the axial direction (3),
- a cage ring (8) which surrounds the rotational axis (6) and which is arranged at the first axial end (4, 163, 173, 183), and
- a further cage ring (9) which surrounds the rotational axis (6) and which is arranged at the second axial end (5, 164, 174, 184),
- wherein the cage ring (8) and the further cage ring (9) comprise a first material,
- wherein each of the laminations (7) has first punched-out portions (10) which form edges of grooves (16) of the laminated rotor core (2, 206, 207, 208), said grooves running from the first axial end (4, 163, 173, 183) to the second axial end (5, 164, 174, 184),
- wherein each of the laminations (7) has a second punched-out portion (11) which forms edges of a passage (12, 126) that runs from the first axial end (4, 163, 173, 183) to the second axial end (5, 164, 174, 184),
- wherein the first punched-out portions (10) lie in an outer region (13) of the laminations (7), and the second punched-out portion (11) lies in an inner region of the laminations (7),
- wherein the passage (12, 126) is filled with a filler material (15) made of the first material, said filler material being integrally connected to the cage ring (8) and to the further cage ring (9),
**c h a r a c t e r i s e d i n t h a t** the grooves (16) are filled with the filler material (15),
or
rods (17) made of a second material with a higher electrical conductivity than an electrical conductivity of the first material are arranged in the grooves (16) and the rods (17) occupy an inner part of the first punched-out portions (10) which faces the inner region of the laminations (7), and an outer part of the first punched-out portions (10) is filled with the first material.

2. Cage rotor (1, 62, 72, 82) according to claim 1, wherein the first material in the passage (12, 126) fills a cross-sectional surface (18) which is bigger than a cross-sectional surface (151) which the first material fills in one of the grooves (16).

3. Cage rotor (1, 62, 72, 82) according to claim 1 or 2, wherein each of the laminations (7) has at least one further punched-out portion (30) in the inner region (14) of the laminations (7), wherein the further punched-out portion (30) forms edges of an open passage (19) which runs from the first axial end (4) to the second axial end (5).

4. Cage rotor (1, 62, 72, 82) according to one of the preceding claims, wherein the passage (12) in the laminations (7) is separate from the grooves (16).

5. Cage rotor (1, 62, 72, 82) according to one of the preceding claims, wherein the edges of the passage (12, 126) which are formed by the second punched-out portion (11) enclose the filler material (15) in the passage (12, 126).

6. Electric machine (50, 52, 54, 56), comprising a cage rotor (1, 62, 72, 82) according to one of the preceding claims.

7. Method for producing a cage rotor (1, 62, 72, 82) according to one of claims 1 to 5, wherein the filler material (15) is brought to the second axial end (5, 164, 174, 184) at least partially via the passage (12, 126), wherein the filler material (15) is brought to the axial end (5, 174, 184) via the passage (126) and the grooves (16), wherein the grooves (16) are filled with the filler material (15),
or
for the production of the cage rotor (1, 72, 82), in which the rods (17) occupy an inner part of the first punched-out portions (10), rods (17) made of the second material are arranged in the grooves (16) before the filler material (15) is brought to the axial end (164) via the passage (12) and the grooves (17), wherein the first material is brought to the axial end (164) in the grooves (17) through an outer part of the first punched-out portions (10).

8. Series (60, 70, 80) of electric machines (51, 52, 53, 54, 55, 56) comprising at least one first electric machine (52, 54, 56), which has a first cage rotor (62, 72, 82) according to one of claims 1 to 5, and at least one second electric machine (51, 53, 55),
- wherein the second electric machine (51, 53, 55) has a cage rotor variant (61, 71, 81) with a laminated rotor core variant (63, 73, 83), which have laminations (7) each with first punched-out portions (10) and each with a second punched-out portion (11) like the laminations (7) of the first cage rotor (62, 72, 82), wherein the respective first punched-out portions (10) of the laminations (7) form edges of grooves (16) of the laminated rotor core variant (63, 73, 83) which run from a first axial end (161, 171, 181) of the laminated rotor core variant (63, 73, 83) to a second axial end of the laminated rotor core variant (63, 73, 83), wherein each second punched-out portion (11) of the laminations (7) forms edges of an open passage (69, 79, 89) of the laminated rotor core variant (63, 73, 83) which runs from the first axial end (161, 171, 181) of the laminated rotor core variant (63, 73, 83) to the second axial end (162, 172, 182) of the laminated rotor core variant (63, 73, 83).

9. Series (60, 80) of electric machines (51, 52, 55, 56) according to claim 8,
- wherein the laminated rotor core (206, 208) of the first cage rotor (62, 82) has a first length which extends from the first axial end (163, 183) to the second axial end (164, 184), and the laminated rotor core variant (63, 83) has a second length which extends from the first axial end of the laminated rotor core variant (161, 181) to the second axial end (162, 182) of the laminated rotor core variant (63, 83), wherein the second length is less than the first length.

## Revendications

1. Rotor (1, 62, 72, 82) à cage d'écureuil pour une machine (50, 52, 54, 56) électrique, qui comprend
- un paquet (2, 206, 207, 208) de tôles rotoriques, qui s'étendent dans une direction (3) axiale d'une première extrémité (4, 163, 173, 183) à une seconde extrémité (5, 164, 174, 184) axiale le long d'un axe (6) de rotation et qui a des tôles (7) feuilletées dans la direction (3) axiale,
- un anneau (8) de court-circuit, qui entoure l'axe (6) de rotation et qui est disposé à la première extrémité (4, 163, 173, 183) axiale et
- un autre anneau (9) de court-circuit, qui entoure l'axe (6) de rotation et qui est disposé à la seconde extrémité (5, 164, 174, 184) axiale,
dans lequel,
- l'anneau (8) de court-circuit et l'autre anneau (9) de court-circuit comprennent un premier matériau,
- dans lequel les tôles (7) ont respectivement des premières découpes (10) qui forment des bords de rainures (16) du paquet (2, 206, 207, 208) de tôles rotoriques, qui s'étendent de la première extrémité (4, 163, 173, 183) axiale à la seconde extrémité (5, 164, 174, 184) axiale,
- dans lequel les tôles (7) ont respectivement une deuxième découpe, qui forme des bords d'un passage (12, 126), qui s'étend de la première extrémité (4, 163, 173, 183) axiale à la seconde extrémité (5, 164, 174, 184) axiale,
- dans lequel les premières découpes (10) se trouvent dans une partie (13) extérieure des tôles (7) et la deuxième découpe (11) se trouve dans une partie intérieure des tôles (7),
- dans lequel le passage (12, 126) est rempli d'un matériau (15) de remplissage en le premier matériau, qui est relié d'une seule pièce avec l'anneau (8) de court-circuit et avec l'autre anneau (9) de court-circuit,
**caractérisé en ce que** les rainures (16) sont remplies du matériau (15) de remplissage,
ou
dans les rainures (16) sont mis des barreaux (17) en un deuxième matériau ayant une conductivité électrique plus grande qu'une conductivité électrique du premier matériau et les barreaux (17) occupent une partie intérieure des premières découpes (10), qui est tournée vers la partie intérieure des tôles (7), et une partie extérieure des premières découpes (10) est remplie du premier matériau.

2. Rotor (1, 62, 72, 82) à cage d'écureuil suivant la revendication 1, dans lequel le premier matériau dans le passage (12, 126) remplit une surface (18) de section transversale qui est plus grande qu'une surface (151) de section transversale que le premier matériau rempli dans l'une des rainures (16).

3. Rotor (1, 62, 72, 82) à cage d'écureuil suivant la revendication 1 ou 2, dans lequel les tôles (7) ont respectivement une autre découpe (30) dans la partie (14) intérieure des tôles (7), l'autre découpe (30) formant des bords d'un passage (19) ouvert, qui s'étend de la première extrémité axiale à la seconde extrémité (5) axiale.

4. Rotor (1, 62, 72, 82) à cage d'écureuil suivant l'une des revendications précédentes, dans lequel le passage (12) dans les tôles (7) est séparé des rainures (16).

5. Rotor (1, 62, 72, 82) à cage d'écureuil suivant l'une des revendications précédentes, dans lequel les bords du passage (12, 126), qui sont formés par la deuxième découpe (11), entourent le matériau (15) de remplissage dans le passage (12, 126).

6. Machine (50, 52, 54, 56) électrique comprenant un rotor (1, 62, 72, 82) à cage d'écureuil suivant l'une des revendications précédentes.

7. Procédé de fabrication d'un rotor (1, 62, 72, 82) à cage d'écureuil suivant l'une des revendications 1 à 5, dans lequel on apporte le matériau (15) de remplissage au moins en partie par le passage (12, 126) à la seconde extrémité (5, 164, 174, 184) axiale, le matériau (15) étant apporté par le passage (126) et par les rainures (16) à l'extrémité (5, 174, 184) axiale, les rainures (16) étant remplies du matériau (15) de remplissage,
ou
pour fabriquer le rotor (1, 72, 82) à cage d'écureuil dans lequel les barreaux (17) occupent une partie intérieure des premières découpes (10), on met dans les rainures (16) des barreaux (17) en le deuxième matériau avant d'apporter le matériau (15) de remplissage par le passage (12) et par les rainures (17) à l'extrémité (164) axiale, dans lequel, dans les rainures (17), le premier matériau est apporté à l'extrémité (164) axiale par une partie extérieure des premières découpes (10).

8. Série (60, 70, 80) de machines (51, 52, 53, 54, 55, 56) électriques, comprenant au moins une première machine (52, 54, 56) électrique, qui a un premier rotor (62, 72, 82) à cage d'écureuil suivant l'une des revendications 1 à 5, et au moins une deuxième machine (51, 53, 55) électrique,
- dans laquelle la deuxième machine (51, 53, 55) électrique a une variante (61, 71, 81) de rotor à cage d'écureuil ayant une variante (63, 73, 83) de paquet de tôles rotoriques, les tôles (7) ayant respectivement une première découpe (10) et respectivement une deuxième découpe (11) comme les tôles (7) du premier rotor (62, 72, 82) à cage d'écureuil, les premières découpes (10) des tôles (7) formant des bords de rainures (16) de la variante (63, 73, 83) de paquet de tôles rotoriques, qui s'étendent d'une première extrémité (161, 171, 181) axiale de la variante (63, 73, 83) de paquet de tôles rotoriques, à une seconde extrémité axiale de la variante (63, 73, 83) de paquet de tôles rotoriques, la deuxième découpe (11) des tôles (11) formant des bords d'un passage (69, 79, 89) ouvert de la variante (63, 73, 83) de paquet de tôles rotoriques qui s'étend de la première extrémité (161, 171, 181) axiale de la variante (63, 73, 83) de paquet de tôles rotoriques à la seconde extrémité (162, 172, 182) axiale de la variante (63, 73, 83) de paquet de tôles rotoriques.

9. Série (60, 80) de machines (51, 52, 55, 56) électriques suivant la revendication 8,
- dans laquelle le paquet (206, 208) de tôles rotoriques du premier rotor (62, 82) à cage d'écureuil a une première longueur, qui s'étend de la première extrémité (163, 183) axiale à la seconde extrémité (164, 184) axiale, et la variante (63, 83) de paquet de tôles rotoriques a une deuxième longueur, qui s'étend de la première extrémité axiale de la variante (161, 181) de paquet de tôles rotoriques à la seconde extrémité (162, 182) axiale de la variante (63, 83) de paquet de tôles rotoriques, la deuxième longueur étant plus petite que la première longueur.
